# EUROPEAN PATENT APPLICATION

(11) **EP 1 191 776 A2**
(43) Date of publication of application: **27.03.2002**
(21) Application number: 01302777.6
(22) Date of filing: 26.03.2001
(51) Int. Cl.: H04M 17/00

(54) **Method for automatically changing an access contract between a prepaid contract and a postpaid contract**

(30) Priority: 20.09.2000 JP 2000286117
(71) Applicant: FUJITSU LIMITED, Kawasaki-shi, Kanagawa 211-8588 (JP)
(72) Inventor: Takae, Naohito, Fujitsu Limited, Kawaskaki-shi, Kanagawa 211-8588 (JP); Tani, H., Fujitsu Higashi-Hokkaido Sys. Eng. Ltd., Obihiro-shi, Hokkaido 080-0037 (JP); Hanada, Saiko, Fujitsu Aomori Systems Eng. Ltd., Aomori-shi, Aomori 030-0192 (JP)
(74) Representative: Fenlon, Christine Lesley

(57) **Abstract**

An access contract changing method can easily change an access contract between a prepaid contract and a postpaid contract so as to reduce inconvenience to a portable phone user. A server (50) of a communication service provider has a client information management system (58) for managing access service provided to the client. The server changes the access contract between the prepaid contract and the postpaid contract by sending an instruction regarding the access contract to the client information management system in response to a predetermined action made by the client.

## Description

### BACKGROUND OF THE INVENTION

### 1. Field of the Invention

The present invention relates to an access contract changing method for changing an access contract and, more particularly, to an access contract changing method for automatically changing an access contract between a communication service provider and a user of the communication service.

### 2. Description of the Related Art

Conventionally, when a person newly purchases a new cellular phone or portable phone, the person must pay a visit to an agent of a cellular phone communication service provider so as to make an access contract with the provider. At that time, the person is requested to present identification such as a driver's license, which identifies the status of the person.

Under a normal contract, a bill is sent from the communication service provider to a user after the user uses the communication system of the communication service provider, and the user pays the communication charge to the communication service provider. Hereinafter, such a contract is referred to as a postpaid contract.

On the other hand, there is a prepaid contract different from the postpaid contract. Under the prepaid contract, there is no need to present personal identification and there is no need to pay a monthly basic fee. The prepaid contact requires a user to use a prepaid type portable phone.

It should be noted that the prepaid type portable phone includes a portable phone exclusively used with a prepaid card system and a portable phone produced by modifying a regular portable phone. Limited types of regular portable phones can be modified to the prepaid type portable phone.

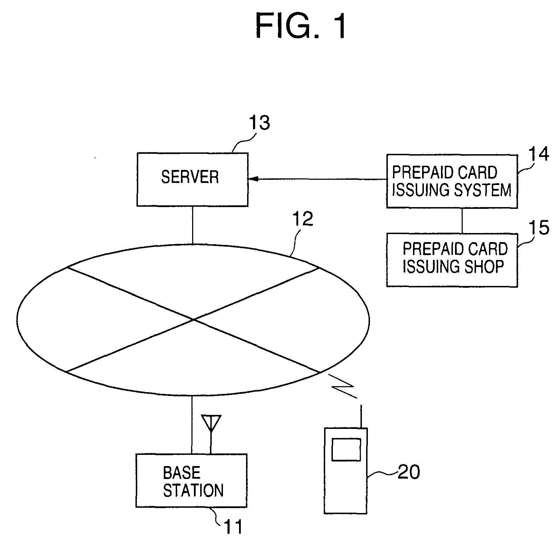

A description will now be given, with reference to FIG. 1, of a conventional cellular phone system utilizing a prepaid card system.

The cellular phone system shown in FIG. 1 comprises a prepaid type portable phone 10, a radio base station 11, a communication network 12, a server 13 of a communication service provider, a prepaid card issuing system 14 and a prepaid card issuing shop 15.

A person who wants to use a prepaid type portable phone visits the prepaid card issuing shop 15, and purchases a prepaid card issued by the prepaid card issuing system 14. It should be noted that when the prepaid card issuing system 14 issues the prepaid card, the prepaid card issuing system 14 sends issue information (prepaid card number) regarding the issued prepaid card to the server 13 of the communication service provider.

The user who purchased the prepaid card uses the prepaid type portable phone and dials a particular number so as to connect the prepaid type portable phone to the server 13 of the communication service provider. Then, the user sends the prepaid-card number recorded on the purchased prepaid card to the server 13 of the communication service provider so as to set a usable call frequency to the prepaid type portable phone. The user of the prepaid type portable phone can make a call within the usable call frequency set in the prepaid type portable phone.

However, the conventional system has the following problems.

### 1) Problem relates to a postpaid contract:

As mentioned above, since the personal identification is required when making a postpaid contract, identification such as a driver's license must be presented. Thus, a person who wants to use a portable phone must visit an agent of the communication service provider to make a postpaid contract.

Additionally, when a user wants to pay a call charge by account transfer, it takes a long time to complete an account confirmation procedure with a banking institution. If it is found, after the prepaid contract is signed up, that the user's account does not exist or there is a mistake in the items on the postpaid contract form filled by the user, the communication service provider stops the communication service to the user at that time. However, there is a problem in that a charge for calls that have already made during a period for confirming the user's account may not be collected. In order to eliminate such a problem, the communication service can be set so that the user cannot use the portable phone until the account confirming procedure with the banking institution is completed. However, such a setting deteriorates a quality of service to the user, and the user may feel inconvenience.

### 2) Problem relates to a change from a prepaid contract to a postpaid contract:

Conventionally, when a user, who has a prepaid type portable phone under a prepaid contract, wants to use a regular portable phone, the user must make a new postpaid contact.

Additionally, a user who wants to make a prepaid contact is forced to use a prepaid type potable phone. Thus, many users using the prepaid type portable phone purchase a new regular portable phone by making a new postpaid contract since there are many types of regular potable phones, which can be selected. On the other hand, when changing from a postpaid contract to a prepaid contract, it is required to use a particular telephone number assigned to a prepaid type portable phone or the user must newly purchase a prepaid type portable phone.

### 3) Problem relates to default of payment:

Under a postpaid contract, if a user fails to pay a communication charge for a predetermined period, the communication service provider stops service to the portable phone owned by the user. Thus, the user cannot use the portable phone from that time. Then, the user failed the payment may make a new contract with a different communication service provider. Such a user may fail again to pay a call charge to the new communication service provider, and may repeat a switch to a different communication service provider while failing payment.

Accordingly, the stop of service to a user, when the user fails to pay a communication charge for a predetermined period, may increase a rate of switch of communication service provider, which results in an increase in an uncollectible call charge.

Additionally, if call reception service to a portable phone owned by a user who fails to pay a communication charge for a predetermined period, time, there is a problem in that the business income, which is supposed to be brought by calls to be received by the user's portable phone, cannot be obtained.

Additionally, if the communication service provider stops communication service to a user, the provider may have nothing to do but wait for a payment from the user.

### SUMMARY OF THE INVENITON

It is a general object of the present invention to provide an improved and useful access contract changing method in which the above-mentioned problems are eliminated.

A more specific object of the present invention is to provide an access contract changing method which can easily change an access contract between a prepaid contract and a postpaid contract so as to reduce inconvenience to a portable phone user.

Another object of the present invention is to provide an access contact changing method which eliminates a limitation in selection of the types of portable phones when making a prepaid contract.

A further object of the present invention is to provide an access contract changing method which can reduce an amount of uncolletible charge due to default of payment.

In order to achieve the above-mentioned objects, there is provided according to one aspect of the present invention an access contract changing method for changing an access contract between a prepaid contract and a postpaid contract in a server of a communication service provider, the server having a client information management system for managing access service provided to the client, the access contract changing method comprising the step of: changing by the server of the communication service provider the access contract between the prepaid contract and the postpaid contract by sending an instruction regarding the access contract to the client information management system in response to a predetermined action made by the client.

According to the above-mentioned invention, the server of the communication service provider facilitates a switch between the prepaid contract and the postpaid contract by changing the access contract between the prepaid contract and the postpaid contract. Thereby, the burden to the user at the time of making the access contract is reduced. Additionally, a limitation in the selection of types of the portable phones is eliminated. Further, arrearage of communication charge can be reduced.

In the access contract changing method according to the present invention, the server of the communication service provider may send an instruction to the client information management system to provide service based on the prepaid contract when the client newly makes the access contract.

According to the above-mentioned invention, since the access contract is initially set to the prepaid contract, the prepaid contract can be used for all types of the portable phones. Additionally, a problem for the communication service provider that a communication charge cannot be collected until an account confirmation procedure is completed can be eliminated. Additionally, a problem that a new type of portable phone must be purchased when switching between the prepaid contract and the postpaid contract. Further, since the application for making the access contract can be made through the Internet, the prepaid contract can be easily made.

Additionally, in the access contract changing method according to the present invention, the server of the communication service provider may send an instruction to the client information management system so as to change the access contract from the prepaid contract to the postpaid contract after a personal identification of the client is confirmed.

Accordingly, the change can be automatically made from the prepaid contract to the postpaid contract by confirming personal identification. Thus, the client can make the access contract under the prepaid contract by applying through the Internet so as to start a use of the network, and then the client can change at an appropriate time the prepaid contract to the postpaid contract by paying a visit to a service office.

In the access contract changing method according to the present invention, the server of the communication service provider may send an instruction to the client information management system so as to change the access contract between the prepaid contract and the postpaid contract in accordance with a condition of payment of a service fee charged to the client.

According to the above-mentioned invention, when the client fails to pay the communication charge under the postpaid contract, the access contract is changed from the postpaid contract to the prepaid contract. Additionally, when the client pays for the credit corresponding to the communication charges under the prepaid contract, the access contract can be changed from the prepaid contract to the postpaid contract. There by, the communication service provider can reduce a risk of uncollectible charges.

Additionally, when a way of payment of service fee is an account transfer, the server of the communication service provider may prohibit sending of an instruction to change the access contract from the postpaid contract to the prepaid contract to the client information management system until an account of the client is confirmed.

Further, the client may pay a whole or a part of the service fee by purchasing a prepaid card and setting a prepaid amount corresponding to the prepaid card to the client information management system. When the client pays for a part of arrearage corresponding to the service fee, an amount obtained by multiplying a predetermined rate may be deducted from the arrearage corresponding to the service fee. When the client pays for arrearage corresponding to the service fee, the client may select an amount or a rate of deduction from the arrearage.

There is provided according to another aspect of the present invention a server of a communication service provider for changing an access contract between a prepaid contract and a postpaid contract, the server comprising: a client information management system for managing access service provided to the client; and means for changing the access contract between the prepaid contract and the postpaid contract by sending an instruction regarding the access contract to the client information management system in response to a predetermined action made by the client.

Additionally, there is provided according to another aspect of the present invention a recording medium storing a program for causing a computer to change an access contract between a prepaid contract and a postpaid contract by sending an instruction regarding the access contract to a client information management system in response to an action made by a client, the client information management system managing access service provided to the client.

Other objects, features and advantages of the present invention will become more apparent from the following detailed description when read in conjunction with the accompanying drawings.

### BRIEF DESCRIPTION OF THE DRAWINGS

FIG. 1 is a block diagram of a conventional cellular phone system utilizing a prepaid card system;
FIG. 2 is a block diagram of a system according to an embodiment of the present invention;
FIG. 3 is a flowchart of a process for applying for entry;
FIG. 4 is an illustration of items stored in an outstanding prepaid amount database shown in FIG. 2;
FIG. 5 is an illustration of items stored in a client information database 51 shown in FIG. 2;
FIG. 6 is a flowchart of a part of a process in a case in which a client making a postpaid contract fails to pay a communication charge;
FIG. 7 is a flowchart of a part of the process in a case in which a client making a postpaid contract fails to pay a communication charge; and
FIG. 8 is a block diagram of a hardware structure of a client information management system.

### DETAILED DESCRIPTION OF THE PREFERRED EMBODIMENTS

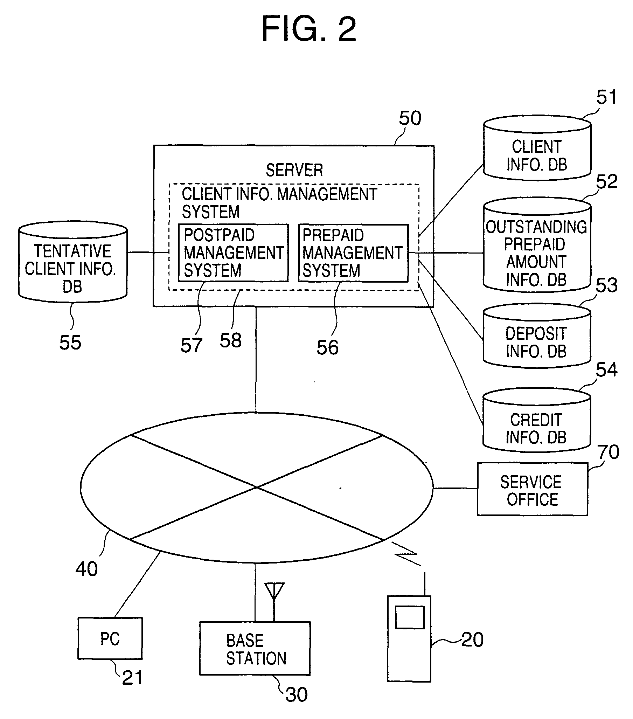

A description will now be given, with reference to FIG. 2, of a system according to an embodiment of the present invention. FIG. 2 is a block diagram of a system according to an embodiment of the present invention;

The system shown in FIG. 2 comprises a portable phone 20, a personal computer 21, a radio base station 30, a communication network 40, a server 50 of a communication service provider and a sales office or service office 70. It can be assumed that each of the portable phone 20, the personal computer 21, the radio base station 30, the communication network 40 and the service office 70 is plural in its number although only one of each is shown in FIG. 2. Additionally, the server 50 of the communication service provider may be plural in it number although only one is shown in FIG. 2.

Conventionally, the portable phone 20 may be either one of a prepaid type portable phone or a regular portable phone assigned with a particular telephone number. However in the present embodiment, a regular portable phone assigned with a telephone number other than a particular telephone number.

A person access the server 50 of the communication service provider through the personal computer 21 so as to apply for entry into a portable phone user. The apparatus is not limited to the personal computer 21, and a portable phone may be used if the portable phone can access the server 50 for applying entry.

The radio base station is a part of the communication network 40, and also serves as a part of a mobile communication network. The radio base station 30 performs a radio communication with the portable phone 20 so as to connect the portable phone 20 to the communication network 40.

The communication network 40 can be a network for communication such as a mobile communication network or the Internet. The communication network 40 has an exchange function relating to a communication of a portable phone. In the present invention, it is established to provide a postpaid service or a prepaid service to a client in accordance with the contract made by the client based on an instruction sent from the server 50 of the communication service provider.

The server 50 of the communication service provider comprises a client information database 51, an outstanding prepaid amount information database 52, a deposit information database 53, a credit information database 54, a tentative client information database 55 and a client information management system 58. The server 50 sends an instruction for an access contract to the client information management system 58 in response to a predetermined action of a client so as to switch the access contract between a prepaid contract and a postpaid contract.

The client information management system 58 comprises a prepaid management system 56 and a postpaid management system 57. It should be noted that the prepaid management system 56 may be installed in a facility of a banking institution or the like.

The prepaid management system 56 includes the outstanding prepaid amount information database 52 so as to manage for each client a telephone number, an outstanding prepaid amount, availability of a prepaid system, an effective period, etc. When a client makes a prepaid contract, the client is registered in the prepaid management system 56. At this time, the prepaid management system 56 prepares a setting to provide prepaid service in payment procedure of the registered client.

The postpaid management system 57 includes the deposit information database 53 and the credit information database 54 so as to manage a detail of use and a status of use for each postpaid contract client. When a client makes a postpaid contract, the client is registered in the postpaid management system 57. At this time, the postpaid management system 57 prepares a setting to provide postpaid service in use of the communication of the registered client.

The service office 70 is a branch office or an agent of the communication service provider having the server 50.

A description will now be given, with reference to process flowcharts, of an access contract changing method between a prepaid contract and a postpaid contract performed in the communication service provider having the server 50.

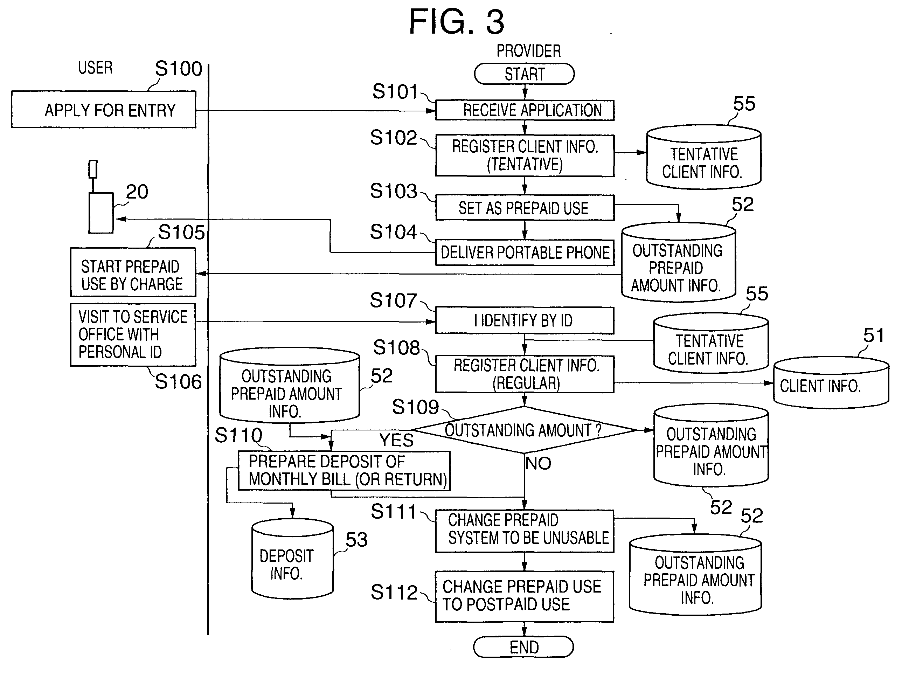

FIG. 3 is a flowchart of a process for applying for entry. First, a user applies for entry by placing a purchase order for a portable phone through the Internet or the like by using the personal computer 21 (S100). When making an application, the user inputs the user's address, name, way of payment, etc.

The server 50 of the communication service provider receives the application for entry of the user (S101), and prepares tentative client information in accordance with the contents of the application. The server 50 registers the tentative client information in the tentative client information database 55 (S102).

Then, the routine proceeds to step S103 so as to register the applicant in the prepaid management system 56 sets the communication network 40 to receive the prepaid service. At the same time, the prepaid management system 56 registers the applicant (client) in the outstanding prepaid amount information database 52 (S103).

The communication service provider delivers a portable phone to the applicant for entry (S104). Accordingly, the user becomes able to use the network according to the prepaid contract, and call reception may be enabled.

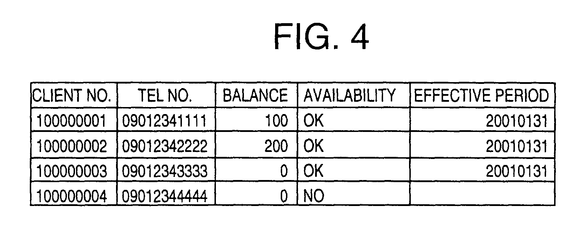

It should be noted that the outstanding prepaid amount database 52 stores information as shown in FIG. 4. In FIG. 4, information regarding client number, telephone number, outstanding prepaid amount, availability of the prepaid system, effective period, etc., is stored in the register for each client. The client number is an individual number of each client. If one client has a plurality of telephone numbers, a plurality of client numbers may be managed by providing a plurality of client numbers, respectively, or the plurality of telephone numbers may be managed under a single client number. The telephone number is an individual telephone number assigned to each client. The balance is a balance obtained by subtracting a communication charge from a deposit. The availability indicates whether or not the prepaid contract is applicable. If there is no balance but within the effective period, call cannot be made but reception of a call can be done. The effective period indicates a period during which a prepaid contract is available. For example, in the prepaid contract, a predetermined period starting from the first call can be set as the effective period.

Next, the user purchases a prepaid card so as to and set the prepaid amount to the prepaid management system 56, thereby enabling the portable phone to be used as a transmitting side. It should be noted that the user sets the prepaid amount by dialing a particular number to access the prepaid management system 56 and sending a number indicated on the prepaid card. When the setting is done, such information is stored in the outstanding prepaid amount information database 52.

The user can continuously use the portable phone by setting a prepaid amount to the prepaid management system 56 by purchasing prepaid cards while maintaining the prepaid contract.

A description will now be given of a case in which the user changes the prepaid contract to a postpaid contract.

The user visits the service office 70 with his or her identification so as to do a predetermined procedure (S106). After the personal identification is done (S107), the server 50 of the communication service provider registers the client information in the client information database 51, which is a regular version (S108).

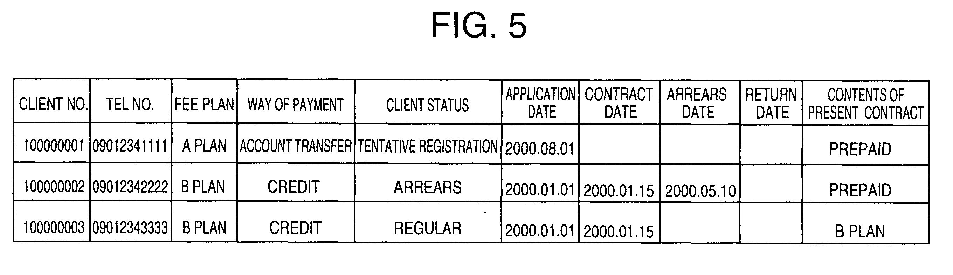

The client information database 51 stores information as shown in FIG. 5. In FIG. 5, information regarding "client number", "telephone number", "fee plan", "way of payment", "client status", "application date", "contract data", "arrears date", "return date", "contents of present contract", etc., is stored for each client.

The "telephone number" indicates a telephone number used by the user. The "fee plan" indicates a fee plan applied for the client. For example, a fee plan such as A plan or B plan suitable for the user's use is stored in accordance with the user's selection. The "way of payment" indicates a way of payment such as account transfer or credit card payment. The "client status" indicates the user's status such as "tentative registration state", "arrears state" or "regular state". The "tentative registration state" indicates a state in which the user is registered in the tentative client information database 55 in accordance with the application for entry by the user, and is not yet registered in the client information database 51, which is a regular version. The "arrears state" is a state in which the user arrears with respect monthly bill of communication charges under the postpaid contract. The "regular state" is a state in which the communication charge is regularly paid with respect to the monthly bill of communication charges. The "application date" is the date of the first prepaid setting under the tentative registration state. The "contract date" is the date of the personal identification being done by the user visiting the service office 70. A basic fee of the prepaid contract is calculated based on a period from the next day to the last day of the monthly period on a daily basis. The "arrears date" is a date of change to the prepaid contract because of a stop of communication service due to arrears. The basic fee is charged by this date on a daily basis. The "return date" is a date of return from the arrears state to the regular state. The basic fee is charged by this date on a daily basis. The "contents of present contract" indicates contents of the contract that is effect at the present time. For example, if a prepaid contract is effective, the prepaid contract is indicated. If a postpaid contract is effective, the fee plan of the post contract is indicated.

The server 50 of the communication service provider checks an outstanding prepaid amount with reference to the outstanding prepaid amount information database 52 (S109). If there is no outstanding prepaid amount (S109; NO), the server 50 changes the prepaid management system to be unusable (S111). Additionally, the item regarding availability in the outstanding prepaid amount information database 52 is changed to "NO".

If there is an outstanding prepaid amount in step 109 (S109: YES), the deposit information is prepared as a deposit on a monthly bill basis by referring to the outstanding prepaid amount information database 52, and the deposit information is registered in the deposit information database 52 (S110). On the other hand, if a user made a request at this time, the deposit may be return to the user. Thereafter, the routine proceeds to step S111 so as to change the prepaid management system 56 to be unusable and change the item regarding availability to "NO".

Thereafter, the user is registered in the postpaid management system 57. The postpaid management system changes the communication network 40 from the prepaid use to the postpaid use. Thereby, the user is permitted to use the portable phone under the postpaid contract (S112). It should be noted that, in a case of account transfer, the routine may be set not to proceed to step 111 until the user's account is confirmed.

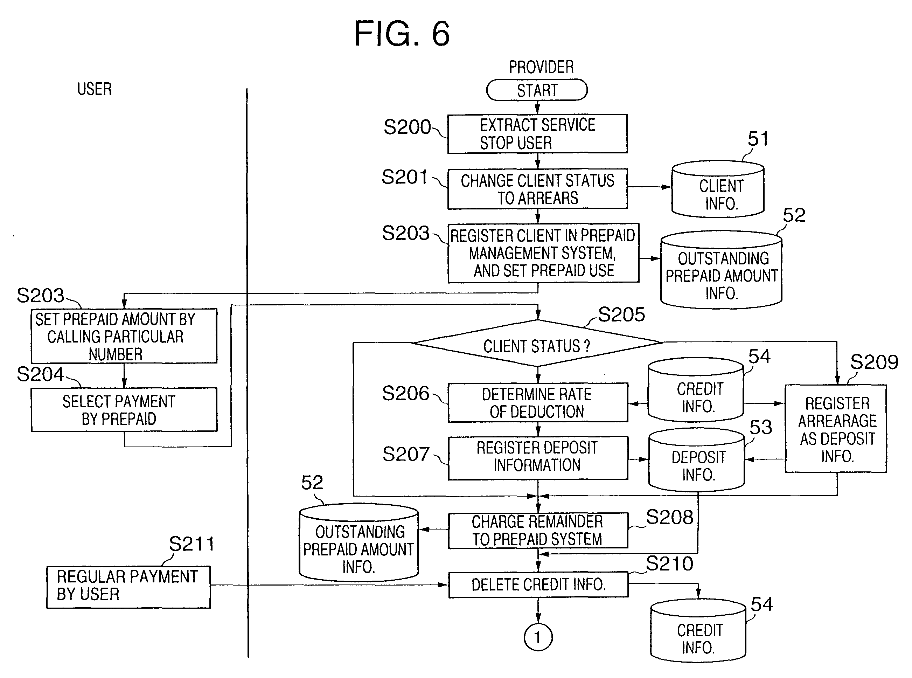

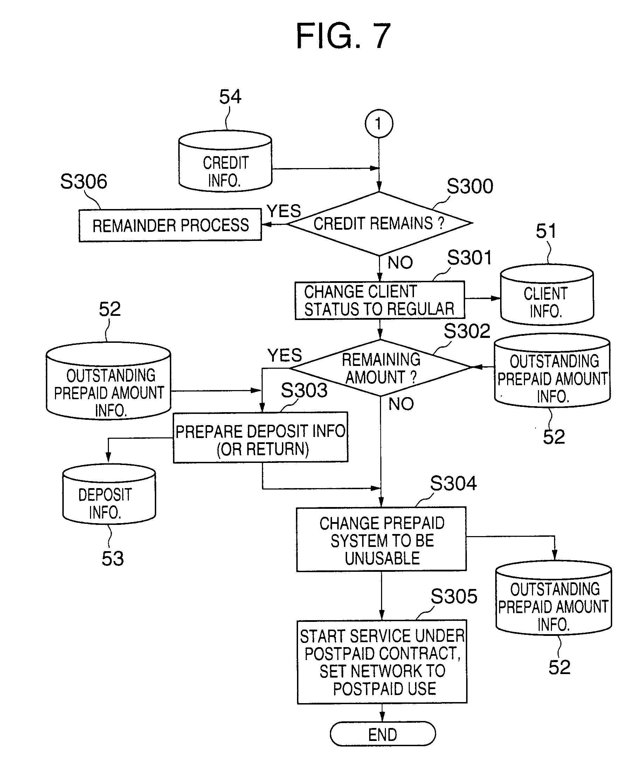

FIGS. 6 and 7 are flowcharts of a process in a case in which a client making a postpaid contract fails to pay a communication charge.

The communication service provider extracts a communication stop user from a user list (not shown in the figure) of an unpaid communication charge (S200). Then, the communication service provider changes the "client status" in the client information of the extracted client from "regular" to "arrears", and registers the client information in the client database 51.

Thereafter, the routine proceeds to step 202 in which the client is registered in the prepaid management system 56. Additionally, the prepaid management system 56 sets the client as a prepaid user. In this state, the user cannot make a call, but there may be a case in the user can receive a call.

Next, in order to enable transmission of a call, the user purchases a prepaid card and accesses the prepaid management system 56 so as to set or charge the prepaid amount. (S203). After the charge, the user selects whether to pay for the arrears by the prepaid amount (S204). It should be noted that when the user pays for the arrears by the prepaid amount, the amount of payment or a rate of payment may be selected.

Upon receipt of payment for the arrears by the prepaid amount of the user, the server 50 of the communication service provider determines a status of the client (205). It the arrears are not paid by the prepaid amount, the routine proceeds to step 208 so as to store a whole amount charged by the client in step 203 in the outstanding prepaid amount information database 52.

On the other hand, if the whole amount of arrears is paid by the prepaid amount, the routine proceeds to step 209. In step 209, the arrearage is registered as deposit information in the deposit information database 53. Next, in step 208, the arrearage is subtracted from the prepaid amount charged by the client in step 203, and the reminder is stored in the "balance" of the outstanding prepaid amount information database 52.

If a part of the arrearage is paid by the prepaid amount, the routine proceeds to step 206. In step 206, a credit amount is checked by referring to the credit information database 54 so as to determine a ratio of deduction. The ratio of deduction can be indicated by the user or determined based on an annual continuing period of the user or the like.

Thereafter, the amount of deduction corresponding to the determined ratio is registered in the deposit information database 53 (207). Then, in step 208, the amount registered in the deposit information database 53 is deducted from the charged amount by the client in step 203, and the remainder is stored in the "balance" of the outstanding prepaid amount information database 52. Then, in step 210, the credit information is deleted based on the received amount or deposit made by the user.

Thereafter, it is determined, with reference to credit information database 54, whether or not a credit remains (S300). If there remains a credit (S300: YES), the routine proceeds to step 306 so as to send a remainder again. On the other hand, if there is no credit remaining (S300: NO), the "client status" of the client in the client information database 51 is changed form "arrears" to "regular" (S301).

Next, the server 50 of the communication service provider checks the prepaid amount by referring to the outstanding prepaid amount database 52 (S302). If there is no balance remaining (S302: NO), the prepaid management system 56 is changed to be unusable and "NO" is set in the item of availability in the outstanding prepaid amount information database 52. Additionally, in order to start the service under the postpaid contract, the communication network 40 is set to the postpaid use.

If it is determined in step 302 that there is a remaining prepaid amount (S302: YES), the deposit information is created as a deposit on a monthly charge basis, and the deposit information is registered in the deposit information database (S303). Additionally, is a user made a request at this time, the deposit may be returned to the user.

Thereafter, the routine proceeds to step 304 so as to change the prepaid management system 56 to be unusable, and the item of availability in the outstanding prepaid amount information database 52 is set to "NO". Then, the client is registered in the postpaid management system 57. The postpaid management system 57 changes the communication network 40 from the prepaid use to the postpaid use with respect to the client (S305).

It should be noted that the contents of contract prior to the arrears of communication charge is stored in the "contents of present contract" in the client database 51 under the postpaid contract.

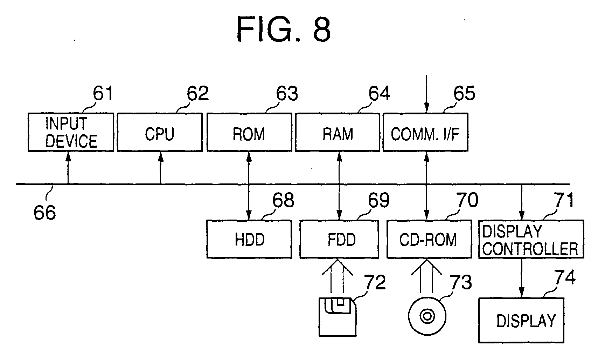

FIG. 8 is a block diagram of a hardware structure of the client information management system 58.

As shown in FIG. 8, the client information management system comprises: an input device 61 such as a keyboard or pointing device; a central processing unit (CPU) 62; a read only memory (ROM) 63; a random access memory (RAM) 64, and communication interface (IF) 65 which interfaces with other devices or the communication network 40; an internal bus 66, a floppy disk drive (FDD) 69 which reads or writes a floppy disk (FD); a CD-ROM drive unit 70 which reads a CD-ROM; and a display controller 71 of a display 74.

It should be noted that a structure of the hardware itself is well known, and descriptions thereof will be omitted.

A recording medium on which a management program is recorded is prepared, which management program is fro changing an access contract between the prepaid contract and the postpaid contract. The program is read from the recording medium so as to have the CPU 62 to execute the program to change the access contract. The recording medium on which the program for changing the access contract may be a floppy disk, a hard disk, an optical disk (CD-ROM, CD-R, CD-R/W, DVD-ROM, DVD-RAM, etc.), a magnetooptical disk or a memory card.

It should be noted that although the change between the postpaid contract and the prepaid contract is described with respect to the change in the arrears case in the above-mentioned embodiment, the postpaid contract may be changed to the prepaid contract by accessing the server of the communication service provider to make a request through the Internet.

Additionally, when the client who have made a postpaid contract changed the postpaid contract to the postpaid contract to a prepaid contract, the prepaid contract may be changed to the prepaid contract by accessing the server of the communication service provider to make a request through the Internet.

The present invention is not limited to the specifically disclosed embodiments, and variations and modifications may be made without departing from the scope of the present invention.

The present invention is based on Japanese priority application No. 2000-286117, filed September 20, 2000, the entire contents of which is hereby incorporated by reference.

## Claims

1. An access contract changing method for changing an access contract between a prepaid contract and a postpaid contract in a server of a communication service provider, the server having a client information management system for managing access service provided to the client, the access contract changing method comprising the step of:
changing by said server of the communication service provider the access contract between the prepaid contract and the postpaid contract by sending an instruction regarding the access contract to said client information management system in response to a predetermined action made by said client.

2. The access contract changing method as claimed in claim 1, wherein said server of the communication service provider sends an instruction to said client information management system to provide service based on the prepaid contract when said client newly makes the access contract.

3. The access contract changing method as claimed in claim 2, wherein said server of the communication service provider sends an instruction to said client information management system so as to change the access contract from the prepaid contract to the postpaid contract after a personal identification of said client is confirmed.

4. The access contract changing method as claimed in claim 1, wherein said server of the communication service provider sends an instruction to said client information management system so as to change the access contract between the prepaid contract and the postpaid contract in accordance with a condition of payment of a service fee charged to said client.

5. The access contract changing method as claimed in claim 3, wherein when a way of payment of service fee is an account transfer, said server of the communication service provider prohibits sending of an instruction to change the access contract from the postpaid contract to the prepaid contract to said client information management system until an account of said client is confirmed.

6. The access contract changing method as claimed in claim 4, wherein said client pays a whole or a part of the service fee by purchasing a prepaid card and setting a prepaid amount corresponding to the prepaid card to said client information management system.

7. The access contract changing method as claimed in claim 6, wherein when said client pays for a part of arrearage corresponding to the service fee, an amount obtained by multiplying a predetermined rate is deducted from the arrearage corresponding to the service fee.

8. The access contract changing method as claimed in claim 6, wherein when said client pays for arrearage corresponding to the service fee, said client selects an amount or a rate of deduction from the arrearage.

9. A server of a communication service provider for changing an access contract between a prepaid contract and a postpaid contract, the server comprising:
a client information management system for managing access service provided to said client; and
means for changing the access contract between the prepaid contract and the postpaid contract by sending an instruction regarding the access contract to said client information management system in response to a predetermined action made by said client.

10. A recording medium storing a program for causing a computer to change an access contract between a prepaid contract and a postpaid contract by sending an instruction regarding the access contract to a client information management system in response to an action made by a client, the client information management system managing access service provided to said client.
